# EUROPÄISCHE PATENTSCHRIFT

(11) **EP 2 558 829 B1**
(45) Veröffentlichungstag und Bekanntmachung des Hinweises auf die Patenterteilung: **10.06.2020**
(21) Anmeldenummer: 11714041.8
(22) Anmeldetag: 13.04.2011
(51) Int. Cl.: G01F 23/292, F01M 11/12

(54) **ÖLSTANDSANZEIGE FÜR EINEN SCHRAUBENVERDICHTER**
OIL LEVEL INDICATOR FOR A SCREW COMPRESSOR
INDICATEUR DE NIVEAU D'HUILE D'UN COMPRESSEUR À VIS

(30) Priorität: 16.04.2010 DE 102010015150
(43) Veröffentlichungstag der Anmeldung: 20.02.2013
(73) Patentinhaber: KNORR-BREMSE Systeme für Schienenfahrzeuge GmbH, 80809 München (DE)
(72) Erfinder: KÖCK, Engelbert, 82152 Planegg (DE)
(74) Vertreter: Schönmann, Kurt
(86) Internationale Anmeldenummer: PCT/EP2011/055766
(87) Internationale Veröffentlichungsnummer: WO 2011/128356

(56) Entgegenhaltungen:
- EP-A2- 0 460 432
- EP-A2- 0 753 722
- WO-A1-2008/122474
- CA-A1- 2 225 112
- US-A- 5 278 426
- US-A- 5 606 125

## Beschreibung

Die Erfindung betrifft eine Vorrichtung zur Überwachung und/oder Anzeige eines bei verschiedenen Betriebszuständen eines Schraubenverdichters schwankenden Ölstandes in einem Ölsumpf des Schraubenverdichters, wobei die Vorrichtung eine optische Einrichtung umfasst, die in einer mit dem Schraubenverdichter verbindbaren Montagevorrichtung montiert ist.

Eine derartige Vorrichtung ist aus der CA 2 225 112 A1 bekannt, die einen Verdichter, nicht aber ausdrücklich einen Schraubenverdichter, offenbart. Der Verdichter weist in seinem Gehäuse, das nicht als Druckbehälter ausgebildet ist, einen Einsatz auf, der von innen in das Gehäuse eingesetzt ist. Der Einsatz weist eine zu dem Ölsumpf gerichtete Linse auf. In den Einsatz ist angrenzend an die Linse eine optische Einrichtung eingesetzt. Wie dies geschieht, ist nicht weiter ausgeführt. Weiterhin ist nicht ausgeführt, wo genau die Einrichtung in Bezug zu dem Ölstand angeordnet ist.

Die EP 0 460 432 A2 offenbart einen ebenfalls nicht ausdrücklich als Schraubenverdichter ausgebildeten Verdichter, der an einer Gehäusewand in Höhe eines Ölsumpfs eine optische Scheibe aufweist. Diese Scheibe ist in geeigneter Weise von außen dicht auf einer Öffnung des Gehäuses befestigt. Hinter der Scheibe ist eine optische Einrichtung angeordnet, die mittels eines Halteteils fixiert ist.

Eine ähnliche Ausgestaltung zeigt die EP 0 753 722 A2. Auch hier ist eine optische Scheibe an einem Gehäuse eines Verdichters angeordnet, wobei hinter der Scheibe eine optische Einrichtung angeordnet ist.

Die WO 2008/12247 A1 offenbart eine technische Lösung für die Füllstandsmessung innerhalb eines Containers mit Hilfe eines optischen Sensors. Dieser ist hier jedoch nur für eine Höchstandsmessung konzipiert, da der Sensor über ein rohrförmiges Gehäuse im Boden des Containers eingesetzt ist.

Die US 5,606,125 A offenbart eine technische Lösung zur Überwachung oder Anzeige eines Ölstandes innerhalb eines Behälters, bei welcher ein optischer Sensor in die Wandung des Behälters, also waagerecht, eingesetzt ist. Die Befestigung des Sensors erfolgt über eine Flanschverbindung zwischen dem Behälter und dem Sensor, so dass diese Befestigungslösung auf ein vordefiniertes Lochmuster der Flanschverbindung festgelegt ist.

Der Erfindung liegt die Aufgabe zu Grunde, eine Vorrichtung zur Überwachung und Anzeige des Ölstandes eines Schraubenverdichters anzugeben, dessen Zuverlässigkeit gegenüber dem Stand der Technik verbessert ist und bei der Fehlmessungen ausgeschlossen sind.

Diese Aufgabe wird dadurch gelöst, dass die Montagevorrichtung in eine Einschrauböffnung eines Druckbehälters des Schraubenverdichters eingeschraubt ist, und dass die Einschrauböffnung in Höhe eines Mindestpegels des Ölstands angeordnet ist. Zunächst einmal weist eine solche optische Einrichtung keine mechanisch bewegten Teile auf, die bei dem oftmals rauen Einsatz der Vorrichtung beschädigt werden können. Die Montagevorrichtung wird mit der optischen Einrichtung bestückt in eine in den Ölsumpf des Schraubenverdichters hineinragende Einschrauböffnung eingeschraubt. Dabei ist es möglich, unterschiedliche Montagevorrichtungen vorzusehen, in die eine einheitlich ausgebildete optische Einrichtung einsetzbar ist. Dies bietet den Vorteil, dass mit der Montagevorrichtung unterschiedliche Applikationen dargestellt werden können, wobei aber die optische Einrichtung immer die gleiche ist. Dabei ist in Weiterbildung der Erfindung die optische Einrichtung ein optischer Sensor oder aber auch ein ohne mechanisch wirkende Teile ausgelegter Schalter. Ein Sensor normalerweise so ausgelegt, dass mit diesem sich kontinuierlich ändernde Signale erzeugt werden, während mit einem Schalter normalerweise zwei Schaltstellungen (ggf. aber auch mehrere Schaltstellungen) erzeugt werden. Da durch das Nichtvorhandsein von mechanisch bewegten Teilen deren Ausfall ausgeschlossen ist, ist die Zuverlässigkeit der erfindungsgemäßen Vorrichtung gegenüber dem Stand der Technik erhöht und Fehlmessungen sind ausgeschlossen. Dies ist insbesondere bei Anwendungen mit einer sehr hohen Anzahl von Druckpulsationen sowie hohen Betriebstemperaturen und Benetzung mit Ölen besonders vorteilhaft.

Erfindungsgemäß ist die optische Einrichtung mit einer elektronischen Auswertungseinrichtung verschaltet. Diese Auswertungseinrichtung berücksichtigt und bewertet Betriebszustände des Schraubenverdichters und - bei einer Verbindung mit einer Motorsteuerung - einer Maschine oder eines Fahrzeuges, in die/das der Schraubenverdichter eingebaut ist. Entsprechend den Betriebsbedingungen kann der Ölstand in dem Ölsumpf beträchtlich schwanken.

Diese so bedingten Schwankungen können durch die erfindungsgemäße Ausgestaltung richtig und zuverlässig bewertet werden. Andererseits kann durch beispielsweise Leckage oder Verbrauch der Ölstand sinken, was im Extremfall bei einem massiven Ölmangel zu einem Ausfall des Schraubenverdichters führen kann. Ein solcher Ölmangel wird durch die erfindungsgemäße Auswertung erkannt und erübrigt beispielsweise eine wegen oftmals schwer zugänglicher Einbausituationen schwierig vorzunehmende visuelle Überprüfung des Ölstands.

In weiterer Ausgestaltung der Erfindung ist die Auswertungseinrichtung mit der optischen Einrichtung zu einer Baueinheit kombiniert und/oder separat zu der optischen Einrichtung angeordnet. Insbesondere die Kombination der Auswertungseinheit mit der optischen Einrichtung bietet sich bei der heute zur Verfügung stehenden Mikroelektronik an und bietet den Vorteil, dass nur ein einziges und zudem kompaktes Bauteil zur Verfügung steht und an dem Schraubenverdichter verbaut werden muss. Zudem ist durch eine solche Baueinheit sichergestellt, dass ein optimaler Abgleich der einzelnen Komponenten aufeinander möglich ist. Selbstverständlich ist es aber im Rahmen der Erfindung auch möglich, die Auswertungseinrichtung separat zu dem Sensor anzuordnen. Dabei kann es im Rahmen der Erfindung auch möglich sein, die Auswertungseinrichtung mit anderen elektrischen oder elektronischen Bauteilen an dem Schraubenverdichter und/oder dem Fahrzeug oder der Maschine zu vereinigen. Hierbei sind auch entsprechende Kombinationslösungen denkbar.

In weiterer Ausgestaltung der Erfindung ist die Montagevorrichtung mit einem Schutzschlauch verbindbar. Eine solche Ausbildung ist insbesondere dann vorgesehen, wenn die Auswertungseinrichtung nicht mit der optischen Einrichtung kombiniert und an anderer Stelle angeordnet oder montiert ist und Signalleitungen, die elektrische und/oder optische Signale übertragen, vorhanden sind.

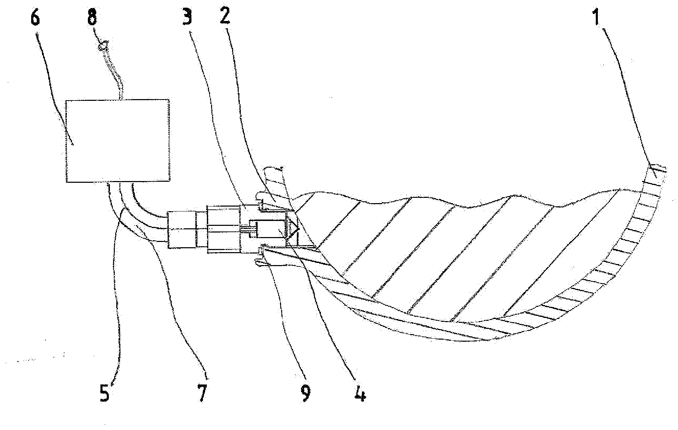

Weitere vorteilhafte Ausgestaltungen der Erfindung sind der Zeichnungsbeschreibung zu entnehmen, in der ein in der einzigen Figur dargestelltes Ausführungsbeispiel der Erfindung näher beschrieben ist.

Ein Schraubenverdichter weist einen Druckbehälter 1 auf, in dem sich Öl unter Bildung eines Ölsumpfs sammelt. Ein solcher Schraubenverdichter wird beispielsweise in Fahrzeugen zur Erzeugung von Druckluft, die unter anderem für die Versorgung von Druckluftbremsanlagen benötigt wird, bereitgestellt. Öl wird beständig durch einen solchen Schraubenverdichter zur Schmierung und Kühlung insbesondere der bewegten Bauteile gefördert. Entsprechend der Betriebsbedingungen kann der Ölstand in der Ölwanne 1 stark variieren. So erreicht der Ölstand bei Leerlaufbetrieb beziehungsweise Stillstand einen relativ hohen Wert oberhalb eines Mindestpegelstands, während bei einem nachfolgenden Umschalten auf den Lastbetrieb der Ölstand durch die dann eingeschaltete Förderung durch den Schraubenverdichter auf oder - was zu vermeiden ist - unter einen Mindestpegelstand abfallen kann. Solche Schwankungen insbesondere hin zu einem Unterschreiten eines Mindestpegelstands werden verstärkt durch eine Leckage oder natürlichen Verbrauch. Schließlich wirkt sich auch der Einsatz der Maschine oder des Fahrzeugs, beispielsweise bei Betrieb mit Schräglage oder bei Beschleunigung/Bremsen (Planschen), auf den Ölstand des eingebauten Schraubenverdichters aus.

Der Druckbehälter 1 des Schraubenverdichters weist eine Einschrauböffnung 2 auf, in die eine Montagevorrichtung 3 einschraubbar ist. Die Einschrauböffnung 2 ist in Höhe des Mindestpegels des Ölstandes angeordnet. Die Einschrauböffnung 2 und die Montagevorrichtung 3 weisen eine zusammenwirkende robuste Verschraubung auf, wobei zwischen der Einschrauböffnung 2 und der Montagevorrichtung 3 eine Dichtung 9 eingefügt ist. In die Montagevorrichtung 3 ist die optische Einrichtung 4, im erfindungsgemäßen Ausführungsbeispiel ein optischer Sensor, so eingesetzt, dass die Optik zu dem Ölsumpf ausgerichtet ist. Dabei ist der Sensor in die Montagevorrichtung 3 in geeigneter Form dicht eingeklebt.

Die mit dem Sensor verbundenen Signalleitungen 5 sind in geeigneter Weise aus der Montagevorrichtung herausgeführt und mit einer Auswertungseinrichtung 6 verschaltet. Die Auswertungseinrichtung 6 ist bei dem Ausführungsbeispiel an geeigneter Stelle des Schraubenverdichters angeordnet. Zum Schutz der Signalleitungen 5 ist ein die Signalleitungen 5 umgebender Schutzschlauch 7 vorgesehen, der wiederum in geeigneter Weise mit der Montagevorrichtung 3 und dem Gehäuse der Auswertungseinrichtung 6 verbunden ist. Hierzu kann die Montagevorrichtung 3 und/oder die Auswertungseinrichtung 6 einen Flansch aufweisen, auf dem der Schutzschlauch 7 aufgezogen wird.

Der optische Sensor sendet und erfasst Lichtsignale, die durch das Öl (oder beispielsweise im Schadensfalldurch das nicht erfasste Öl) verändert werden. Diese Signale werden der Auswertungseinrichtung 6 zugeführt und ausgewertet.

Die Auswertungseinrichtung 6, die im Rahmen der Erfindung beispielsweise durch Einsatz von entsprechender Mikroelektronik auch in die Montagevorrichtung 3 integriert sein kann, kann über eine Leitung 8 mit einer Motorsteuerung des Fahrzeugs verschaltet sein und Signale zum Betriebszustand des entsprechenden Fahrzeugs erhalten und zusammen mit den Informationen zum Betriebszustand des Schraubenverdichters auswerten. Letzteres erhöht die Zuverlässigkeit der Auswertung beträchtlich, da der Ölstand - wie weiter oben ausgeführt - stark von Betriebszuständen abhängig ist.

### Bezugszeichenliste

- 1: Druckbehälter
- 2: Einschrauböffhung
- 3: Montagevorrichtung
- 4: optische Einrichtung
- 5: Signalleitung
- 6: Auswertungseinrichtung
- 7: Schutzschlauch
- 8: Leitung
- 9: Dichtung

## Patentansprüche

1. Vorrichtung zur Überwachung und/oder Anzeige eines bei verschiedenen Betriebszuständen eines Schraubenverdichters schwankenden Ölstandes in einem Ölsumpf des Schraubenverdichters zur Erzeugung von Druckluft in Fahrzeugen für die Versorgung von Druckluftbremsanlagen, wobei die Vorrichtung eine optische Einrichtung (4) umfasst, die in einer mit dem Schraubenverdichter verbindbaren Montagevorrichtung (3) montiert ist, wobei die Montagevorrichtung (3) in eine Einschrauböffnung (2) eines Druckbehälters (1) des Schraubenverdichters eingeschraubt ist und die Einschrauböffnung (2) in Höhe eines Mindestpegels des Ölstands angeordnet ist, wobei zwischen der Einschrauböffnung (2) und der Montagevorrichtung (3) eine Dichtung (9) eingefügt ist, und wobei die optische Einrichtung (4) ein Sensor ist, wobei die optische Einrichtung (4) mit einer elektronischen Auswerteeinrichtung verschaltet ist, **dadurch gekennzeichnet, dass** der Sensor in die Montagevorrichtung (3) dicht eingeklebt ist, wobei die elektronische Auswertungseinrichtung (6) dazu ausgebildet ist, mit einer Motorsteuerung des Fahrzeuges verschaltet zu sein, Signale zum Betriebszustand des Fahrzeuges zu erhalten und diese zusammen mit dem Betriebszustand des Schraubenverdichters und den Signalen von der optischen Einrichtung (4) auszuwerten.

2. Vorrichtung nach Anspruch 1,
**dadurch gekennzeichnet, dass** die optische Einrichtung (4) ein ohne mechanisch wirkende Teile ausgelegter Schalter ist.

3. Vorrichtung nach einem der vorherigen Ansprüche,
**dadurch gekennzeichnet, dass** die Auswertungseinrichtung (6) mit der optischen Einrichtung (4) kombiniert zu einer Baueinheit kombiniert ist und/oder separat zu der optischen Einrichtung (4) angeordnet ist.

4. Vorrichtung nach einem der vorherigen Ansprüche,
**dadurch gekennzeichnet, dass** die Montagevorrichtung (3) mit einem Schutzschlauch (7) verbindbar ist.

5. Vorrichtung nach einem der vorherigen Ansprüche,
**dadurch gekennzeichnet, dass** die Auswertungseinrichtung (6) in die Montagevorrichtung (3) integriert ist.

## Claims

1. Device for monitoring and/or displaying an oil level that fluctuates in various operating components of a screw-type compressor, in an oil sump of the screw-type compressor for producing compressed air for the supply of compressed-air brake units, such that the device comprises an optical device (4) which is fitted into a mounting device (3) that can be connected to the screw-type compressor, wherein the mounting device (3) is screwed into a threaded opening (2) of a pressure container (1) of the screw-type compressor and the threaded opening (2) is arranged at the height of a minimum oil level, with a seal (9) inserted between the threaded opening (2) and the mounting device (3), and wherein the optical device (4) is a sensor, such that the optical device (4) is wired to an electronic evaluation device,
**characterised in that** the sensor is adhesively bonded firmly into the mounting device (3), and the electronic evaluation device (6) is designed to be wired to an engine control system of the vehicle, to receive signals about the operating condition of the vehicle and to evaluate them together with the operating condition of the screw-type compressor and the signals from the optical device (4).

2. Device according to Claim 1,
**characterised in that** the optical device (4) is a switch designed without mechanically acting components.

3. Device according to either of the preceding claims,
**characterised in that** the evaluation device (6) is combined with the optical device (4) to form an assembly, and/or is arranged separately from the optical device (4).

4. Device according to any of the preceding claims,
**characterised in that** the mounting device (3) can be connected to a protective hose (7).

5. Device according to any of the preceding claims,
**characterised in that** the evaluation device (6) is integrated in the mounting device (3).

## Revendications

1. Système de contrôle et/ou d'indication d'un niveau d'huile, fluctuant avec des états de fonctionnement différents d'un compresseur à vis, dans un puisard d'huile du compresseur à vis pour la production d'air comprimé dans des véhicules en vue de l'alimentation d'installations de frein à air comprimé, le système comprenant un dispositif (4) optique, qui est monté dans un système (3) de montage pouvant être relié au compresseur à vis, le système (3) de montage étant vissé dans un taraudage (2) d'un récipient (1) sous pression du compresseur à vis et le taraudage (2) étant disposé à hauteur d'un niveau minimum de l'huile, dans lequel une garniture (9) d'étanchéité est insérée entre le taraudage (2) et le système (3) de montage et dans lequel le dispositif (4) optique est un capteur, le dispositif (4) optique étant connecté à un dispositif électronique d'exploitation,
**caractérisé en ce que** le capteur est collé de manière étanche dans le système (3) de montage, le dispositif (6) électronique d'exploitation étant constitué pour être connecté à une commande de moteur du véhicule, pour obtenir des signaux sur l'état de fonctionnement du véhicule et pour les exploiter ensemble avec l'état de fonctionnement du compresseur à vis et les signaux du dispositif (4) optique.

2. Système suivant la revendication 1,
**caractérisé en ce que** le dispositif (4) optique est un interrupteur conçu sans partie à effet mécanique.

3. Système suivant l'une des revendications précédentes,
**caractérisé en ce que** le dispositif (6) d'exploitation est combiné au dispositif (4) optique en une unité de construction et/ou est disposé séparément du dispositif (4) optique.

4. Système suivant l'une des revendications précédentes,
**caractérisé en ce que** le système (3) de montage peut être relié à un tuyau (7) souple de protection.

5. Système suivant l'une des revendications précédentes,
**caractérisé en ce que** le dispositif (6) d'exploitation est intégré au système (3) de montage.
